# EUROPEAN PATENT SPECIFICATION

(11) **EP 3 527 074 B1**
(45) Date of publication and mention of the grant of the patent: **29.09.2021**
(21) Application number: 19157750.1
(22) Date of filing: 18.02.2019
(51) Int. Cl.: A01M 7/00

(54) **NEBULISER WITH POWERED TURBINE**
VERNEBLER MIT ANGETRIEBENER TURBINE
NÉBULISEUR COMPORTANT UNE TURBINE MOTORISÉE

(30) Priority: 19.02.2018 ES 201830148; 12.02.2019 ES 201930223 U
(43) Date of publication of application: 21.08.2019
(73) Proprietor: Balbastre Y Sanjaime S.L., 46840 La Pobla del Duc, Valencia (ES)
(72) Inventor: Balbastre Soler, Juan José, ES-46840 La Pobla del Duc (ES); Sanjaime Bosca, Salvador, ES-46840 La Pobla del Duc (ES)
(74) Representative: Soler Lerma, Santiago

(56) References cited:
- US-A- 2 475 449
- US-A- 2 476 960
- US-A- 2 538 879
- US-A- 2 608 441

## Description

The invention, as its name implies, relates to a nebuliser, of the type comprising a turbine that generates an air current that is channelled and directed against a deflector that directs the air current to the outside of the device, a series of nozzles being arranged at the perimeter, which supply the liquid to be dispersed to the air current that drags it in this manner, taking it until depositing it on the plants and trees to be fumigated.

The invention relates, in particular, to the inclusion and arrangement of a secondary turbine that introduces air into an intermediate chamber existing between the main and secondary turbine such that the suction effort of the main turbine is reduced, increasing its effectiveness in the propulsion and optionally being able to further comprise a deflector with grooves.

The field of the art to which it belongs is that of nebulisers for agricultural use.

### BACKGROUND OF THE INVENTION

Fumigators are known and widely used in agriculture that comprise a tank with the liquid to be dosed and a turbine that generates an air current which, directed against a deflector, is made to go outside dragging in its outflow the product to be fumigated, which is supplied to the air current by nozzles arranged in the passage thereof.

Enhancements to devices of the type indicated are known, essentially aimed at improving the performance either by controlling the air flow through multipliers, potentiometers or turbine with adjustable blades, or by controlling the outflow and direction of the air, by opening or closing the outlet.

The applicant itself is the owner of European patent EP2223593 relating to an oscillating deflector that widens or reduces the air outlets, giving rise to different outflow speeds and generating a movement in the plants that favours the fumigation.

That patent envisaged the use of two propellers facing each other, each generating their own air flow that they directed towards an intermediate point where the oscillating deflector was disposed, which redirected the air of both towards the exterior. There was no collaboration between the propellers in the sense of applying both to generate a single current, notwithstanding that at the outflow to the exterior, the currents may or may not come together.

A turbine for use in agricultural nebulisers that comprise two propellers which collaborate in the generation of the same air current, has not been found in patent literature, nor is there evidence of any use or disclosure by any other means.

Patents have been found that include the existence of double-blade turbines, although their operation pursues different objectives.

Patent US475449 relates to a spraying machine that obtain a uniform flow of air with the utilization of at least a pair of propellers, through an open ended chamber, for the - purpose of picking up spraying material to be -directed with the air blast uniformly into the foliage of the trees.

Patent US2476960 relates to a spraying or dusting machine that is extremely effective in the generation of a large volume of insecticide carrying air that may be subjected readily to deflection and other controls.

Thus, utility model ES295276U relates to a turbine that incorporates blades and counter-blades, wherein the counter-blades are downstream of the blades and have the purpose of breaking the helical effect and establishing an air flow parallel to their axis.

Patent ES8308679 also relates to a nebuliser with a turbine comprising counter-blades which in this case are attached to the outer fairing of the turbine, serving as guides for its movement.

None of the documents found make reference to a nebuliser with a double propeller turbine of the type that is the object of the present invention, nor are nebulisers that incorporate same known.

At present, nebulisers work with a single propeller by air current, such that the same propeller must do the suction work from the outside and propulsion work against the deflector that redirects the current towards the exterior. It is common for turbines of this type, with a single propeller per air current, to have low performance.

That is why, in order to achieve a greater air flow and better nebulisation, it is often necessary to resort to installing more than one turbine, with the ensuing increase in installation and consumption costs.

On the other hand, this type of nebuliser always attempts to penetrate in the plant mass as much as possible, to which end it usually generates turbulence that stir the first layers of plant mass, allowing the product to access the inside. Various patents are known that relate to nebulisers which, through different solutions, seek to generate turbulence.

Some patents are based on swinging movements of the spraying device, as in the case of utility model ES1022791U, ES1037754U or patent ES471284, being machines whose technical solution has nothing to do with what is proposed here and which exhibit a swinging movement of at least the assembly formed by the turbine and the duct. These machines have certain maintenance problems, since their structure must support a great mass in constant swinging movement.

Patent EP10001892, of the same applicant, had a deflector with a swivelling movement that greatly improved the result by reducing the mechanical complications caused by the swinging movement of large groups of parts.

No document is known wherein the solution for generating turbulence is a deflector that includes grooves.

### DESCRIPTION OF THE INVENTION

In order to solve the aforementioned problems, a turbine comprising at least two propellers arranged in line, preferably coaxially, is proposed, wherein the first propeller, the outermost one, sucks air from the exterior and takes it to a chamber arranged between the two propellers such that the second, innermost propeller needs to make no suction effort because it is supplied with air by the outer propeller, merely propelling it towards the interior of the nebuliser, normally against the deflector.

Chamber will refer to the area where the first propeller discharges the air flow, regardless of its size or of the fact that the start of the second propeller may coincide in that area.

Although constructions of more than two propellers or propellers that are not coaxial with each other can be made, the most common construction and which is considered preferable for its simplicity and good results, will be that of two coaxial propellers arranged in line and which rotate together, thereby avoiding the use of multipliers or demultipliers between one and another that would mechanically complicate the turbine.

In a preferred embodiment, the second propeller is larger than the first.

Each of the propellers is arranged in a duct that contributes to channel the air flow.

First duct will refer to the duct that houses the first propeller and second duct the duct that houses the second propeller.

The first duct and second duct are arranged in line and their internal diameter is proportionate to the size of the propeller housed therein such that, in a preferred embodiment, the internal diameter of the first duct is smaller than the internal diameter of the second duct, such that the propellers occupy most of the inner section of the duct in which they are housed.

The propellers are preferably helical to improve performance, although other types of propellers may be installed.

In order to favour the channelling of the air from the first propeller to the second propeller, the first duct can overlap with the second duct, whereupon the first duct is partially inserted in the second duct. In an alternative embodiment there may be closing means between one duct and the other to prevent air from flowing out between one duct and the other.

In the preferred embodiment, both propellers are coaxial and rotate together, being joined to a common shaft that supports them and transmits the rotation.

On including a second propeller supported by the same shaft, the weight borne by the shaft increases, so in order to prevent the forces to which it is subjected from damaging it, it is made to rest on a support that we will call hub, which is in turn secured to a base that supports the entire duct and propeller assembly.

The existence of the hub gives the assembly robustness and prevents the shaft of the propellers from suffering due to the forces to which it is subjected and breaking or bending, with the ensuing consequences.

This hub may be arranged on any point of the shaft, such as for example between the two propellers or between the second propeller and the deflector, although it has been decided to locate it on the outer part, in the suction zone of the first propeller.

In this way the hub is more effective, avoiding the fatigue of the shaft and also is does not obstruct the air currents generated by the propellers.

In order to contribute to generating greater turbulence during nebulisation, the nebuliser may further comprise a grooved deflector, understood as such a deflector comprising radial channels, said channels being, preferably, slightly curved.

These channels have alternating ridges and valleys, all of which can be of the same depth or variable depth.

In the channels, the valleys have a smaller cross-section in the part closest to the centre of the deflector and a larger cross-section at their outlet on the outer perimeter of the deflector, while the ridges maintain a constant cross-section from their beginning, in the central area of the deflector, to their end at the perimeter thereof, although this might not always be so and will depend, among other things, on the sizing of the deflector in relation to the turbine and the distance between the deflector and the duct.

In order to better understand the invention, it is accompanied by the figures explained below.

### BRIEF DESCRIPTION OF THE FIGURES

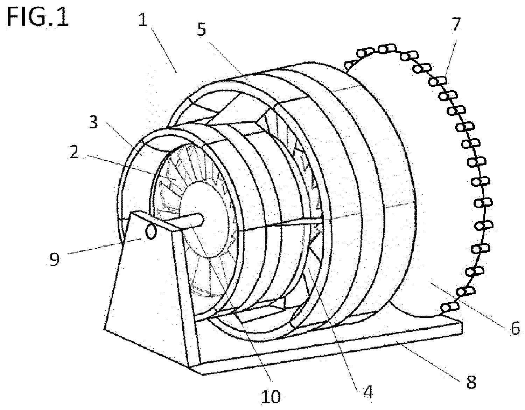

FIGURE 1 shows the double propeller turbine (1), wherein the first propeller (2), the first duct (3), the second propeller (4), the second duct (5), the deflector (6) and the nozzles (7) that supply the product to be nebulised in the air current, the support (8) and the hub (9) whereon the shaft (10) of the first and second propeller rests, can be observed.

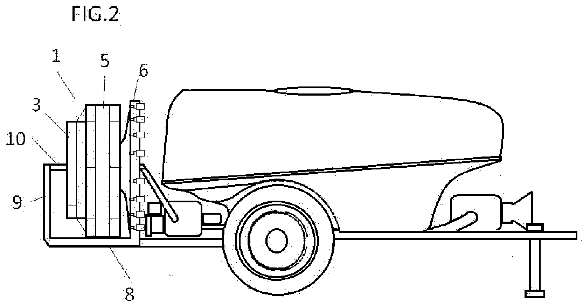

FIGURE 2 shows the nebuliser that comprises the turbine (1), showing the first duct (3) partially inserted in the second duct (4), the deflector (6), the support (8) and the hub (9) whereon the shaft (10) of the first and second propeller rests.

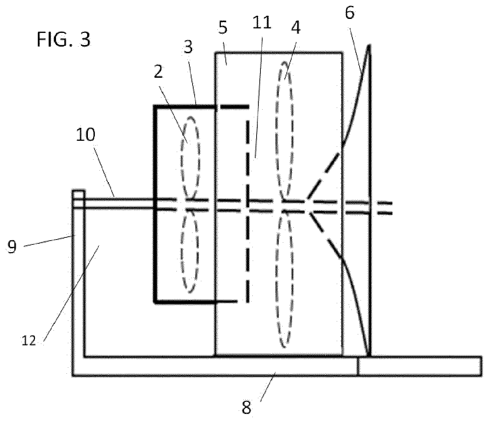

FIGURE 3 shows a schematic view of the turbine that comprises the first propeller (2), the first duct (3), the second propeller (4), the second duct (5), the deflector (6), the support (8) and the hub (9), arranged in the suction zone (12) whereon the shaft (10) of the first and second propeller rests, and the chamber (11) where the first propeller discharges the air it suctions.

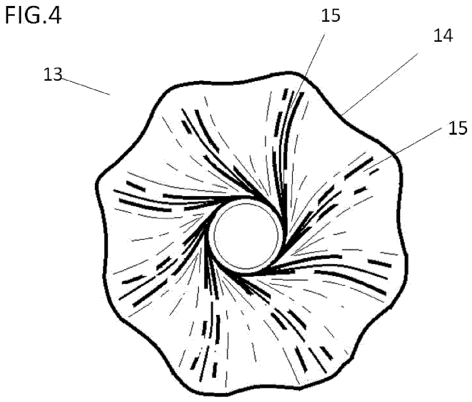

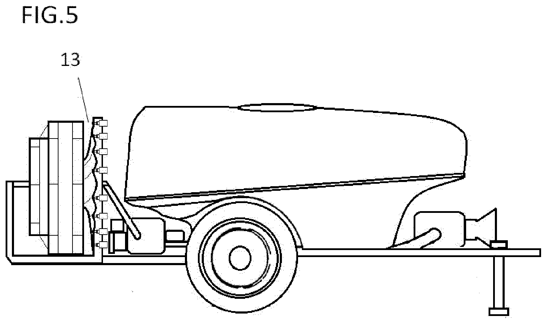

FIGURE 4 shows a grooved deflector (13), in this case round, in which the radial channels can be seen, wherein each channel has a valley (14) delimited by two ridges (15), wherein the valleys are narrower -having a cross-section of smaller radius- in the centre of the deflector and they widened as they move away therefrom, while the ridges keep a constant cross-section.
FIGURE 2 shows the deflector (13) mounted on a nebuliser showing the duct that contains the turbine and wherein the air current that will be propelled against the deflector is generated, and the nozzles wherethrough the product to be nebulised will flow out.

### DESCRIPTION OF A PREFERRED EMBODIMENT OF THE INVENTION

What follows is an explanatory but non-limiting embodiment of the invention.

The nebuliser that is the object of the invention comprises:
A first propeller (2) housed in a first duct (3) of which it occupies most of its internal cross-section.
A second propeller (4) housed in a second duct (5) of which occupies most of its internal cross-section.

Both propellers are arranged in line.

The first propeller (2) is smaller in diameter than the second propeller (4) and the internal cross-section of the first duct (3) is smaller than the internal cross-section of the second duct (5).

The first duct (3) is partially inserted in the second duct (5).

The first propeller (2) and the second propeller (4) are coaxial and rotate together on a drive shaft (10).

This shaft (10) rests on a hub (9) arranged in the suction zone of the first propeller and which is attached to the support (8) whereon the assembly is arranged.

Between the first and second propeller there is a chamber (11) where the first propeller (2) discharges the air it suctions.

The turbine arranged in the aforementioned manner and with the said elements achieves greater performance, since the first propeller (2) is in charge of suctioning the air, taking it to the chamber (11) such that the second propeller (4) is supplied with air, avoiding the overexertion of having to suction and propel the air.

In this embodiment, the nebuliser comprises the grooved deflector (13), which comprises a circular body made from a resistant material and having a hole in the central part thereof suitable for allowing the passage of the turbine shaft.

Emerging from said central hole, initially tangential thereto, are ridges (15) and valleys (14) that gradually open radially towards the perimeter of the deflector where the valleys end. The valleys have a larger cross-section as they move away from the centre of the deflector, while the ridges have a constant cross-section throughout their path.

These ridges and valleys follow a path with a certain curvature to generate a swirling outflow of air, which improves the penetration of the nebulised product in the vegetable mass by stirring the first layers of the plant mass and preventing the generation of a screen.

The depth and cross-section of all the valleys is identical, as is the cross-section of all the ridges, although this may not always be the case.

## Claims

1. A NEBULISER WITH POWERED TURBINE of the type that comprise elements to generate an air current which is channelled towards a deflector that redirects this current to the exterior, dragging the product that flows through nozzles arranged in the vicinity of the air current at its outlet, comprising:
a first propeller (2) housed in a first duct (3),
a second propeller (4) housed in a second duct (5),
a shaft (10), a chamber (11) between the first and the second propeller,
a deflector (6),
wherein the first propeller (2) and the second propeller (4) are arranged in line, wherein the first propeller is in an outermost position sucking the outside air and taking it to the chamber and the second propeller takes the air from the chamber and propels it towards the deflector (6), and the first duct (3) and the second duct (5) are in line, the first duct (3) being partially inserted in the second duct (5).

2. The NEBULISER WITH POWERED TURBINE, according to claim 1, **characterised in that** the first propeller (2) is smaller in diameter than the second propeller.

3. The NEBULISER WITH POWERED TURBINE, according to claim 1, **characterised in that** the propellers are helical.

4. The NEBULISER WITH POWERED TURBINE, according to claim 1, **characterised in that** the first propeller (2) and the second propeller (4) are coaxial.

5. The NEBULISER WITH POWERED TURBINE, according to claim 1, **characterised in that** the first propeller (2) and the second propeller (4) move together.

6. The NEBULISER WITH POWERED TURBINE, according to claim 1, **characterised in that** the shaft (10) rests on a hub (9) arranged in the suction zone (12).

7. The NEBULISER WITH POWERED TURBINE, according to claim 1, **characterised in that** the hub (9) is attached to the support (8).

8. The NEBULISER WITH POWERED TURBINE, according to claim 1, **characterised in that** the deflector (6) is a grooved defector (13) that comprises a plurality of valleys (2) delimited by ridges (3) forming channels and wherein those channels are arranged radially from the central area of the deflector towards its perimeter where they end perpendicularly to the shaft of the turbine.

9. The NEBULISER WITH POWERED TURBINE, according to claim 8, **characterised in that** the valleys and ridges have a curved path.

10. The NEBULISER WITH POWERED TURBINE, according to claim 9, **characterised in that** the valleys have a smaller cross-section in the central part of the deflector and a larger cross-section at their outlet at the perimeter of the deflector.

11. The NEBULISER WITH POWERED TURBINE, according to claim 9, **characterised in that** the ridges have a constant cross-section.

12. The NEBULISER WITH POWERED TURBINE, according to claim 9, **characterised in that** all the valleys are identical.

13. The NEBULISER WITH POWERED TURBINE, according to claim 9, **characterised in that** all the ridges are identical.

## Patentansprüche

1. ZERSTÄUBER MIT EINER ANGETRIEBENEN TURBINE, von dem Typ, der Elemente umfasst, um einen Luftstrom zu erzeugen, der zu einem Deflektor geleitet wird, welcher diesen Strom an die äußere Umgebung umleitet, wobei der das Produkt mitreißt, das durch Düsen strömt, die in der Umgebung des Luftstroms an seinem Auslass angeordnet sind, umfassend:
einen ersten Propeller (2), der in einem ersten Rohrkanal (3) eingehaust ist,
einen zweiten Propeller (4), der in einem zweiten Rohrkanal (5) eingehaust ist,
eine Welle (10), eine Kammer (11) zwischen dem ersten und zweiten Propeller,
einen Deflektor (6),
wobei der erste Propeller (2) und der zweite Propeller (4) in einer Linie angeordnet sind, wobei der erste Propeller sich in einer äußersten Position befindet und die Außenluft ansaugt und sie in die Kammer bringt, und der zweite Propeller die Luft von der Kammer nimmt und sie zu dem Deflektor (6) hin antreibt, und der erste Rohrkanal (3) und der zweite Rohrkanal (5) sich in einer Linie befinden, wobei der erste Rohrkanal (3) zum Teil in den zweiten Rohrkanal (5) eingeführt ist.

2. ZERSTÄUBER MIT ANGETRIEBENER TURBINE nach Anspruch 1, **dadurch gekennzeichnet, dass** der erste Propeller (2) einen kleineren Durchmesser aufweist als der zweite Propeller.

3. ZERSTÄUBER MIT ANGETRIEBENER TURBINE nach Anspruch 1, **dadurch gekennzeichnet, dass** die Propeller spiralförmig sind.

4. ZERSTÄUBER MIT ANGETRIEBENER TURBINE nach Anspruch 1, **dadurch gekennzeichnet, dass** der erste Propeller (2) und der zweite Propeller (4) koaxial sind.

5. ZERSTÄUBER MIT ANGETRIEBENER TURBINE nach Anspruch 1, **dadurch gekennzeichnet, dass** der erste Propeller (2) und der zweite Propeller (4) sich gemeinsam bewegen.

6. ZERSTÄUBER MIT ANGETRIEBENER TURBINE nach Anspruch 1, **dadurch gekennzeichnet, dass** die Welle (10) auf einer Nabe (9) ruht, die in der Ansaugzone (12) angeordnet ist.

7. ZERSTÄUBER MIT ANGETRIEBENER TURBINE nach Anspruch 1, **dadurch gekennzeichnet, dass** die Nabe (9) an dem Träger (8) angebracht ist.

8. ZERSTÄUBER MIT ANGETRIEBENER TURBINE nach Anspruch 1, **dadurch gekennzeichnet, dass** der Deflektor (6) ein mit Rillen versehener Deflektor (13) ist, der eine Vielzahl von Tälern (2), die durch Rippen (3) begrenzt sind und Kanäle ausbilden, umfasst, und wobei diese Kanäle radial von dem zentralen Bereich des Deflektors zu seinem Umfang hin angeordnet sind, wo sie senkrecht auf die Welle der Turbine enden.

9. ZERSTÄUBER MIT ANGETRIEBENER TURBINE nach Anspruch 8, **dadurch gekennzeichnet, dass** die Täler und Rippen einen gekrümmten Verlauf aufweisen.

10. ZERSTÄUBER MIT ANGETRIEBENER TURBINE nach Anspruch 9, **dadurch gekennzeichnet, dass** die Täler einen kleineren Querschnitt in dem zentralen Teil des Deflektors und einen größeren Querschnitt an ihrem Auslass an dem Umfang des Deflektors aufweisen.

11. ZERSTÄUBER MIT ANGETRIEBENER TURBINE nach Anspruch 9, **dadurch gekennzeichnet, dass** die Rippen einen konstanten Querschnitt aufweisen.

12. ZERSTÄUBER MIT ANGETRIEBENER TURBINE nach Anspruch 9, **dadurch gekennzeichnet, dass** alle Täler identisch sind.

13. ZERSTÄUBER MIT ANGETRIEBENER TURBINE nach Anspruch 9, **dadurch gekennzeichnet, dass** alle Rippen identisch sind.

## Revendications

1. NÉBULISEUR À TURBINE ALIMENTÉE du type comprenant des éléments pour générer un courant d'air qui est acheminé vers un déflecteur qui redirige ce courant vers l'extérieur, entraînant le produit qui s'écoule à travers des buses agencées à proximité du courant d'air au niveau de sa sortie, comprenant :
une première hélice (2) reçue dans un premier conduit (3),
une deuxième hélice (4) reçue dans un deuxième conduit (5),
un arbre (10), une chambre (11) entre les première et deuxième hélices,
un déflecteur (6),
dans lequel la première hélice (2) et la deuxième hélice (4) sont agencées en ligne, dans lequel la première hélice se trouve dans la position la plus à l'extérieur aspirant l'air extérieur et l'amenant vers la chambre et la deuxième hélice prélève l'air dans la chambre et le propulse vers le déflecteur (6), et le premier conduit (3) et le deuxième conduit (5) sont en ligne, le premier conduit (3) étant partiellement inséré dans le deuxième conduit (5).

2. NÉBULISEUR À TURBINE ALIMENTÉE, selon la revendication 1, **caractérisé en ce que** la première hélice (2) est de diamètre inférieur à celui de la deuxième hélice.

3. NÉBULISEUR À TURBINE ALIMENTÉE, selon la revendication 1, **caractérisé en ce que** les hélices sont hélicoïdales.

4. NÉBULISEUR À TURBINE ALIMENTÉE, selon la revendication 1, **caractérisé en ce que** la première hélice (2) et la deuxième hélice (4) sont coaxiales.

5. NÉBULISEUR À TURBINE ALIMENTÉE, selon la revendication 1, **caractérisé en ce que** la première hélice (2) et la deuxième hélice (4) se déplacent ensemble.

6. NÉBULISEUR À TURBINE ALIMENTÉE, selon la revendication 1, **caractérisé en ce que** l'arbre (10) repose sur un moyeu (9) agencé dans la zone d'aspiration (12).

7. NÉBULISEUR À TURBINE ALIMENTÉE, selon la revendication 1, **caractérisé en ce que** le moyeu (9) est fixé au support (8).

8. NÉBULISEUR À TURBINE ALIMENTÉE, selon la revendication 1, **caractérisé en ce que** le déflecteur (6) est un déflecteur cannelé (13) qui comprend une pluralité de vallées (2) délimitées par des crêtes (3) formant des canaux et où ces canaux sont agencés radialement depuis la zone centrale du déflecteur vers son périmètre où ils se terminent perpendiculairement à l'arbre de la turbine.

9. NÉBULISEUR À TURBINE ALIMENTÉE, selon la revendication 8, **caractérisé en ce que** les vallées et les crêtes ont un trajet incurvé.

10. NÉBULISEUR À TURBINE ALIMENTÉE, selon la revendication 9, **caractérisé en ce que** les vallées ont une section transversale plus petite dans la partie centrale du déflecteur et une section transversale plus grande au niveau de leur sortie au périmètre du déflecteur.

11. NÉBULISEUR À TURBINE ALIMENTÉE, selon la revendication 9, **caractérisé en ce que** les crêtes ont une section transversale constante.

12. NÉBULISEUR À TURBINE ALIMENTÉE, selon la revendication 9, **caractérisé en ce que** toutes les vallées sont identiques.

13. NÉBULISEUR À TURBINE ALIMENTÉE, selon la revendication 9, **caractérisé en ce que** toutes les crêtes sont identiques.
